(19) Europäisches Patentamt
European Patent Office
Office européen des brevets

(11) Publication number: **0 255 250 B1**

(12) **EUROPEAN PATENT SPECIFICATION**

(45) Date of publication of patent specification: **01.09.93** (51) Int. Cl.5: **G11B 5/702**

(21) Application number: **87306020.6**

(22) Date of filing: **08.07.87**

(54) **Magnetic recording media and a method using a stable fluid reactive dispersion in preparing magnetic recording media.**

(30) Priority: **31.07.86 US 892248**
**31.07.86 US 892229**

(43) Date of publication of application:
**03.02.88 Bulletin 88/05**

(45) Publication of the grant of the patent:
**01.09.93 Bulletin 93/35**

(84) Designated Contracting States:
**DE GB NL**

(56) References cited:
**EP-A- 0 172 501**
**DE-A- 3 136 086**
**US-A- 4 070 522**

(73) Proprietor: **MINNESOTA MINING AND MANUFACTURING COMPANY**
**3M Center, P.O. Box 33427**
**St. Paul, Minnesota 55133-3427(US)**

(72) Inventor: **Harrell, Edward R. c/o Minnesota Mining and**
**Manufacturing Company 2501 Hudson Road**
**P.O. Box 33427 St. Paul Minnesota 55133(US)**
Inventor: **Rustad, Norman E. c/o Minnesota Mining and**
**Manufacturing Company 2501 Hudson Road**
**P.O. Box 33427 St. Paul Minnesota 55133(US)**
Inventor: **Mosbey, Deral T. c/o Minnesota Mining and**
**Manufacturing Company 2501 Hudson Road**
**P.O. Box 33427 St. Paul Minnesota 55133(US)**
Inventor: **Ramharack, Roopram c/o Minnesota Mining and**
**Manufacturing Company 2501 Hudson Road**
**P.O. Box 33427 St. Paul Minnesota 55133(US)**

(74) Representative: **Baillie, Iain Cameron et al**
**c/o Ladas & Parry, Altheimer Eck 2**
**D-80331 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 255 250 B1

## Description

Field of the Invention

This invention relates to a magnetic recording medium. In one aspect, this invention relates to a magnetic recording medium comprised of finely divided magnetic particles dispersed in a particular binder. In another aspect, this invention relates to the use of a reactive dispersion of finely divided magnetic particles useful in preparing magnetic recording media.

Background of the Invention

The properties required of the binder for a magnetic recording medium require precise synthesis of the binder materials. First and foremost of the properties required is the ability of the binder to maintain the extremely small magnetic particles in a fixed position which permits them to be magnetized, demagnetized and to impart a strong, modulated magnetic signal over long exposure to environmental and mechanical stresses. This ability requires physical properties of the binder such as tensile strength, flexibility with high modulus and surface energy properties which promote dispersion and wettability which, to some extent, are mutually exclusive. In order to achieve overall balanced performance, compromises are made which permit acceptable limits of performance while optimizing specific properties such as modulus or wettability. In magnetic "tape" construction, properties such as flexibility are optimized. In magnetic "disk" construction, hardness and durability can more easily be optimized because less stress is put on flexibility.

As magnetic media have become more sophisticated and as the magnetic particles which the binder is required to hold in rigid and intimate contact become extremely small with geometrical designs which enhance magnetic strength, the role of the binder becomes even more critical.

Binder formulation is further complicated by the fact that in order to make the storage of magnetic tape less bulky, the substrate, which is usually a highly oriented polyester film, has been made thinner and thinner in each succeeding generation of tape products. As a result, the polymeric binder, whose prime function is to maintain the magnetic particle in fixed position, is required to assume part of the function of the substrate, i.e., contribute to the mechanical properties of the magnetic media such as flexural modulus and tensile strength. This is so because with thicker substrates, the modulus and the tensile strength of the composite were provided by the substrate. In modern tapes with thinner substrates, the binder will substantially contribute to these properties of the composite.

To balance the rigidity needed of modern binders with the flexibility needed to respond to the requirements of recording mechanisms, hard or rigid polymers are combined with soft or compliant polymers to achieve optimum performance. Furthermore, when the binder polymeric segments are judiciously selected, they can be very fluid, readily coated and cured by crosslinking to the desired state.

U.S. Patent No. 4,405,684 to Blumentritt et al. discloses a rigid magnetic recording medium having finely divided magnetic particles dispersed in a thermosetting resin binder which is comprised of a blocked isocyanate having at least three reactive sites per chain and an oligomer having at least two hydroxy reactive sites per polymer chain and a molecular weight of 200 to 800 per hydroxy site. The patent discloses the incorporation of a high functionality rigid polymer segment such as a low molecular weight styrene-allyl alcohol copolymer to improve the hardness of binders which are also comprised of hydroxyl-terminated polyesters. The object of the invention taught in the patent is to provide resin binder systems having long pot-life and capable of achieving strong adhesion to a rigid substrate (such as an aluminum disc) used in the recording medium and to that end, blocked isocyanates are disclosed as crosslinking agents of the binder. The binder resin systems taught cannot be used in conventional flexible media due to thermal distortion and/or degradation of the flexible support base upon exposure to the temperatures needed to activate a blocked isocyanate.

U.S. Patent No. 4,407,901 to Miyatsuka et al. discloses a magnetic recording medium comprising a non-magnetic base bearing a layer mainly consisting of ferromagnetic particles and a binder wherein the magnetic layer contains a copolymer having a polar functional group and a degree of polymerization of not more than 100. Examples of polar functional groups are carboxyl groups, hydroxyl groups, phenolic-OH groups, and sulfonic acid groups. The carboxyl groups and phenolic-OH groups of the polymers disclosed in the only specific examples react with polyisocyanate crosslinking agents at ambient conditions only at undesireably slow rates.

## Summary of the Invention

This invention relates to a magnetic recording medium comprising:

a) a non-magnetic support base having two opposing major surfaces, and

b) a magnetizable or non-magnetizable layer on at least a portion of at least one of said major surface, wherein at least one of said magnetizable and non-magnetizable layers is comprised of a finely divided particulate solid and a crosslinked binder mixture therefor, which crosslinked binder mixture comprises:

(1) at least 5 weight percent of a hard component dispersing polymer having a degree of polymerization greater than 100 comprised of units derived from:

(i) one or more vinyl aromatic monomers and one or more ethylenically unsaturated monomers having aliphatic hydroxyl functionality, or

(ii) one or more vinyl aromatic monomers having hydroxyl functionality,

which polymer is crosslinked into said binder; and

(2) a soft-component contributing polymer which is a multi-hydroxyl-functional polyurethane; the weight ratio of hard-component contributing polymers to soft-component contributing polymers ranging from 1:4 to 4:1.

A variation of the invention (referred to hereinafter as the low molecular weight variation) is a magnetic recording medium like that just described, except that the dispersing polymer is not limited by degree of polymerization. However, such recording media are limited to those having a magnetizable layer present on at least one major surface and those on which the dispersing polymer is derived from the monomers of subparagraph (i) above. Such dispersing polymers in these recording media can have a degree of polymerization less than or equal to 100, and may be, for example, copolymers of styrene and allyl alcohol. Their molecular weight can be in the range of 1,000 to 2,500 and they may contain 0.2 to 6 percent by weight hydroxyl groups.

This invention also relates to a method of preparing magnetic media comprising forming a stable, fluid reactive dispersion comprising a finely divided particulate solid and a cross-linkable dispersing polymer as described above, mixing said reactive dispersion with a crosslinker to form a coatable mixture, and coating a non-magnetic support base with said coatable mixture. The use of the crosslinkable dispersing polymer in preparing the magnetic media of this invention provides a magnetic layer and/or backside layer wherein the particulate solid (e.g., magnetic particles) and the cross-linkable dispersing polymer associated therewith are uniformly and securely dispersed within a binder matrix thereby improving the resistance to movement of the particles and dispersing polymer within the binder matrix. The reactive dispersion can be used to make either flexible or rigid magnetic recording media.

The polymeric binder is a combination of a "hard" component derived from the crosslinkable dispersing polymer and a "soft" component containing the multi-hydroxyl functional polyurethanes which when properly synthesized contributes to the effectiveness of the magnetic coating as a recording medium.

As used herein, a "crosslinked binder mixture" shall mean the mixture of crosslinkable binder resins, including both hard-component and soft-component resins, and a crosslinker therefor. When calculating the weight percent of a component of the crosslinked binder mixture, the weight of the finely divided particulate solid, suspending aids, lubricants and the like are not included as part of the weight of the crosslinked binder mixture.

The finely divided particulate solid can be a finely divided magnetic material or other functional particles such as titanium dioxide and/or an electrically-conductive form of carbon. In a particularly preferred embodiment, the flexible nonmagnetic support base is a tape, the tape carrying, on one surface, a magnetizable layer having magnetic particles in the binder described above and carrying, on the opposing surface, a non-magnetizable layer and titanium dioxide and electrically-conductive carbon particles in the binder described above. For floppy disk applications, a magnetic layer of this invention may be present on both the major surfaces thereof, i.e., as a double-coated floppy disk.

## Detailed Description of the Invention

The present invention provides magnetic recording media such as magnetic tapes, floppy disks, and rigid disks. The magnetic recording media of this invention are preferably manufactured from the reactive dispersions of this invention, i.e., compositions consisting essentially of finely divided magnetic particles and a crosslinkable dispersing polymer, but can be manufactured without first combining the polymer and magnetic particles.

The reactive dispersions of this invention are prepared by mixing the dispersing polymer with the finely divided magnetic particles. The mixture also contains one or more solvents to fluidize the mixture for ease

of mixing and, preferably, wetting agents and suspending aids. The mixture need then be subjected to only moderate mixing forces, e.g., a Shar mixer at 4200 rpm for 2 to 4 hours, to prepare a smooth reactive dispersion of this invention. Suitable solvents include ketones, e.g., methyl ethyl ketone and/or cyclohexanone, and aromatic hydrocarbons, e.g., toluene. Suitable wetting agents include phosphoric acid esters such as mono-phosphorylated propylene oxide adducts of glycerine, e.g., the reaction product of 1 mole of phosphorus oxychloride with the reaction product of 10-11 moles of propylene oxide and 1 mole of glycerine. Suitable suspending aids include quaternary ammonium acetates or phosphates such as those available as Emcol™ acetate or phosphate from Witco Chemical Co.

The magnetic recording medium of this invention is comprised of finely divided magnetic particles dispersed in a binder. For flexible magnetic recording media, i.e. magnetic tape and floppy disks, the binder should be flexible. The elongation of the crosslinked binder mixture itself without the finely divided magnetic particles dispersed therein has been found to correlate well with the flexibility of the cured binder having the finely divided magnetic particles dispersed therein. Accordingly, the preferred flexible crosslinked binder mixtures of the present invention have an elongation of at least about 5%, preferably at least about 10%, as measured by ASTM D-412-80 and D-638-82 so that the magnetic recording medium will be flexible, rather than rigid. For certain applications, the elongation of the binder is even greater, i.e., at least about 25% and preferably greater than 100%.

The binder is comprised of a crosslinked polymer comprised of units derived from group (i) one or more vinyl aromatic monomers and one or more ethylenically unsaturated monomers copolymerizable with the vinyl aromatic monomer said ethylenically unsaturated monomer having aliphatic hydroxyl functionality after polymerization with the vinyl aromatic monomer or from group (ii) one or more vinyl aromatic monomers having hydroxyl functionality. This polymer, when used in the binder at proper concentrations, will yield a flexible but hard magnetic medium which has low stiction, high modulus and a very smooth surface. Further, the dispersibility of the finely divided magnetic particles in the dispersing polymer is such that higher solids coatings can be obtained with shorter mill cycles as compared with conventional polymeric binders.

As to the polymers of group (i) described above, examples of suitable vinyl aromatic monomers from which the dispersing polymer may be derived include styrene, vinyl toluene, alpha-methylstyrene, vinyl xylene and the like. Examples of suitable comonomers include allyl alcohol, vinyl alcohol, 3-hydroxy-1-butene, 4-hydroxy-1-butene, 2-hydroxyethyl acrylate, 2-hydroxypropyl acrylate, vinyl glycolate, and the like.

Alternatively, the dispersing polymer is comprised of units derived from a vinyl aromatic monomer having hydroxyl functionality. Examples of such monomers include vinyl phenols such as p-vinyl phenol and the like, vinyl cresols such as p-vinyl-m-cresol and the like, and p-hydroxy-alpha-methylstyrene and the like. Polymers which fall into both groups (i) and (ii), e.g., copolymers of ethylenically unsaturated monomers having aliphatic hydroxyl functionality or vinyl aromatic monomers and vinyl aromatic monomers having hydroxyl functionality and terpolymers of the three monomers of both groups (i) and (ii) are also within the scope of this invention.

The dispersing polymer can also contain units derived from other ethylenically unsaturated monomers. Particularly preferred other ethylenically unsaturated monomers, hereinafter referred to as highly-polar comonomers, include those having one or more functional groups having higher polarity than an aliphatic hydroxyl group, e.g. carboxylic acid, phosphonic acids, sulfonic acids, and salts of each, particularly alkali metal salts such as sodium and potassium. Dispersing terpolymers derived from these highly-polar comonomers result in superior reactive dispersions. Examples of highly-polar comonomers which contribute these additional groups include methacrylic acid, 2-acrylamido-2-methyl-propanesulfonic acid, 2-acrylamido-2-methyl-propanephosphonic acid, styrene-sulfonic acid, methacryloylpropanesulfonic acid, and the alkali metal, e.g., sodium or potassium, salts of each. The precise amount of these highly-polar comonomers may vary, but will generally range from about 2% to about 10% by weight of the dispersing polymer. At levels significantly below about 2%, the dispersing terpolymer fails to exhibit an improved quality dispersion over that of a dispersing copolymer. At levels significantly higher than about 10%, the dispersing terpolymer causes aggregation of the particulate solids in the dispersion.

Except for the low molecular weight variation described above, the degree of polymerization of the dispersing polymer is preferably greater than about 100. The degree of polymerization of the polymer is preferably controlled so that the molecular weight of the copolymer will range from about 10,000 to about 300,000. The amount of the hydroxyl functional comonomer of the polymers of group (i) will be from about 10 to about 80 percent by weight of the copolymer.

The precise amount of crosslinkable dispersing polymer as a percentage of the binder resins may vary, but significant, i.e., greater than nominal amounts, maximize the benefits that are realized in terms of both the quality of the dispersion and the mechanical properties of the binder. In general, the dispersing polymer

is preferably present in an amount not less than 5 percent by weight of the crosslinked binder mixtures, preferably from about 10 to about 30 percent.

Three preferred classes of dispersing copolymers useful in this invention are described in more detail below.

1. Styrene-Hydroxyalkyl Acrylate Copolymers

These are preferably made by free radical polymerization using a thermally activated initiator such as 1,1'-azobiscyclohexanecarbonitrile (available as VAZO™ 88 from DuPont). The conditions can be optimized to obtain nearly quantitative conversion (approx. 99%) in dry 2-butanone, making it possible to use this solution directly in the formulation. The percent styrene can be varied widely, preferably from 65 to 80 (too high of a percent of the polar monomers would cause the coating to be water sensitive) and the molecular weight has been varied from 5,000 to 100,000 (see Table 1, below, wherein all the quoted molecular weights were obtained by gel permeation chromatography using polystyrene standards). Evaluation of selected samples show that these polymers have good miscibility with polyurethanes to form composites having fast cure rates and high moduli, often higher than comparable low molecular weight polymers (see Table 3 below). The magnetic and surface properties (see Table 4 below) were also good.

2. Styrene-Vinyl Alcohol Copolymers

Poly(styrene-co-vinyl acetate) is preferably made by free radical polymerization techniques in a solvent, e.g., 2-butanone, and a free radical initiator, e.g. VAZO™ 88 available from duPont. This vinyl acetate copolymer is then completely base-hydrolyzed (as detected, for example, by the complete disappearance of the carbonyl peak in the infrared spectrum at 1754 $cm^{-1}$ and the $^{13}C$ NMR spectrum at 176.3 ppm from tetramethyl silane) in a solvent such as aqueous dioxane to give a random copolymer of styrene and vinyl alcohol. When these copolymers are put into formulations, tapes with good cures and high modulus are obtained.

3. Styrene-Allyl Alcohol Copolymers

Styrene-allyl alcohol copolymers having higher molecular weights than commercially available styrene-allyl alcohol copolymers, e.g., those available from Monsanto as RJ-100 and RJ-101 can be synthesized by the free radical polymerization of styrene and methyl acrylate to form poly(styrene-co-methyl acrylate) which can then be chemically reduced, e.g. with lithium aluminum hydride, to yield poly(styrene-co-allyl alcohol).

The dispersing polymers described above is cross-linked in the cured binder. Its hydroxyl sites enable crosslinking by means of reaction with polyfunctional organic crosslinkers. Examples of suitable crosslinkers include polyisocyanates, polyaziridines, and the like. Preferred crosslinkers are polyisocyanates which will react with the aliphatic hydroxyl groups of the dispersing polymer to form urethane crosslinks in the cured binder. The preferred crosslinkers will have a crosslinking functionality between about 2 and about 4. A particularly preferred crosslinker is a triisocyanate available from Mobay as CB-60 or 75.

The dispersing polymer described above is a hard-component contributor in a polymeric binder formulation, i.e., a binder prepared from such a copolymer alone would be hard, but may be too brittle for many applications. Accordingly, an additional cobinder polymer or resin, hydroxy-functional, is used to contribute a soft segment to the polymeric binder matrix and thereby toughen the binder. This is the multi-hydroxy-functional urethanes for example as described in U.S. Patent Nos. 4,368,238 and 4,400,498.

These resins are obtainable by the polymerization of a long chain diol (A) having a molecular weight ranging from about 500 to 3,000, an organic diisocyanate (C) and a short chain triol (D) having a molecular weight lower than about 500 and, if desired, a short chain diol (B) having a molecular weight ranging from about 50 to 500.

More particularly, preferred resins of this type comprise a combination of units represented by formulas (I):

$$-[W-OC(O)-NH-X-NH-(O)CO]_{n_1}- \quad (a)$$

$$-[Y(OH)-OC(O)-NH-X-NH-(O)CO]_{n_2}- \quad (b)$$

$$-[Z-OC(O)-NH-X-NH-(O)CO]_{n_3}- \quad (c)$$

wherein

W is a residue derived by the elimination of the two hydroxyl groups from a long chain diol (A) having a molecular weight in a range of about 500 to 3,000;

X is a residue derived by the elimination of the two isocyanate groups from an organic isocyanate (C); Y(OH) is a residue derived by the elimination of the two hydroxyl groups from a short chain triol (D) having a molecular weight in the range lower than about 500;

Z is a residue derived by the elimination of the two hydroxyl groups from a short chain diol (B) having a molecular weight in a range of about 50 to 500;

$n_1$ and $n_2$ are each a positive integer; and

$n_3$ is 0 or a positive integer.

The long chain diol (A) to be employed for the thermoplastic polyurethane resin has a molecular weight in the range from about 500 to 3,000 and may include, for example, a polyester diol, a polyether diol, a polyether ester glycol and the like.

The polyester diol may include, for example, a polyester diol obtainable by the reaction of an aliphatic dicarboxylic acid such as succinic acid, adipic acid, sebacic acid, azelaic acid or the like; an aromatic dicarboxylic acid such as terephthalaic acid, isophthalic acid or the like; a lower alcohol ester, such as methyl or ethyl ester, of the carboxylic acid with a glycol such as ethylene glycol, 1,3-propylene glycol, 1,4-butylene glycol, 1,6-hexane glycol, diethylene glycol, 1,4-cyclohexanedimethanol, neopentyl glycol or the like, an ethylene oxide adduct of bisphenol A or the like or a mixture thereof with a polyester diol of the lactone type obtained by the cleavage polymerization of a lactone such as $\epsilon$-caprolactone or the like. The polyether diol may include, for example, a polyalkylene ether glycol such as polyethylene glycol, polypropylene ether glycol, polytetramethylene ether glycol or the like, and a polyether glycol obtainable by the copolymerization of these glycols. The polyether ester glycol may include, for example, a polyester ether glycol obtainable by the reaction of the aforesaid polyalkylene ether glycol with an aliphatic or aromatic dicarboxylic acid as hereinabove enumerated as the polyol component.

In magnetic tape applications, the multi-hydroxyl-functional polyurethane resin used in preparing a coating for the backside is preferably prepared with a long chain diol having a molecular weight greater than about 500 and less than about 1000. It has been found that these lower molecular weight long chain diols yield backside binder coatings having properties superior to those wherein the long chain diol has a molecular weight of 1000 g/mole or greater.

The short chain diol (B) to be optionally used for the thermoplastic polyurethane resin has a molecular weight in the range from about 50 to 500 and may include, for example, an aliphatic glycol such as ethylene glycol, propylene glycol, 1,4-butylene glycol, 1,6-hexane glycol, 1,4-cyclohexanedimethanol, neopentyl glycol or the like or an aromatic diol such as ethylene oxide adduct or propylene oxide adduct of bisphenol A, ethylene oxide adduct of hydroquinone or the like. The short chain diol (B) may be used singly or in admixture with each other.

The organic diisocyanate (C) to be used for the thermoplastic polyurethane resin may include, for example, an aliphatic diisocyanate, an aromatic diisocyanate or an alicyclic diisocyanate such as hexamethylene diisocyanate, isophorone diisocyanate, dicyclohexylmethane diisocyanate, methylcyclohexane diisocyanate, toluene diisocyanate, 4,4'-diphenylmethane diisocyanate, ditoluene diisocyanate, paraxylene diisocyanate, naphthalene diisocyanate, dianisidine diisocyanate, xylylene diisocyanate or the like. The diisocyanates (C) may be employed singly or in admixture with each other.

The short chain triol (D) to be used for the thermoplastic polyurethane resin has a molecular weight in the range of less than about 500. Specific examples include the following compounds: glycerine, ethylene oxide adduct of glycerine, ethylene oxide adduct of glycerine, 2-methyl-propane-1,2,3-triol, 4-[bis(2-hydroxyethyl)]-2-hydroxypentane, 3-methylpentane-1,3,5-triol, and 1,2,6-hexanetriol, 1-bis(2-hydroxyethyl)-amino-2-propanol(N-isopropanol diethanolamine), propylene oxide adduct of diethanolamine, and ethylene oxide adduct of N-isopropanoldiethanolamine.

The thermoplastic polyurethane resin may be prepared by subjecting the long chain diol (A), the short chain triol (D) and the organic diisocyanate (C), and optionally, the short chain diol (B) to a polymerization reaction. The polymerization may be carried out by a known method: for example, a one-shot method in which all the components are simultaneously reacted with each other in solution. It is also convenient to use a modified one-shot method in which all the (A), (B), (C) and (D) reactants are charged together, with the exception of a portion of isocyanate (C) which is reserved. This reserved portion is then added to the reaction mixture after the originally charged isocyante (C) is consumed preferably in increments.

The weight ratio of soft-component contributing cobinder resin to hard-component contributing resin will preferably range from about 4:1 to 1:4. To balance the rigidity contributed to the binder by the dispersing copolymer, other hard-component resins such as vinyl resins and nitrocelluloses can be blended with the dispersing copolymer at a ratio between 1:4 and 4:1 by weight to modify the hard segment as it is blended with the soft-segment crosslinkable resins.

Suitable examples of vinyl resins which can be incorporated into the binder mixture are vinyl chloride/vinyl acetate copolymers, vinyl chloride/vinylidene chloride copolymers, vinyl chloride/acrylonitrile copolymers, vinylidene chloride/acrylonitrile copolymers, polyvinyl butyral. These polymers preferably contain functional groups which strengthen adsorption of the binder on magnetic materials. Preferred examples of such functional groups include a hydroxyl group and a carboxyl group. Particularly preferred examples include a vinyl chloride/vinyl alcohol copolymer, a vinyl chloride/maleic acid copolymer, a vinyl chloride/vinyl acetate/vinyl alcohol copolymer, a vinyl chloride/vinyl acetate/maleic acid copolymer, a vinyl chloride/vinyl alcohol/maleic acid copolymer, a vinyl chloride/vinyl acetate/vinyl alcohol/maleic acid copolymer.

The finely divided magnetic particles used in this invention may include the particles of magnetic oxides, such as, gamma-$Fe_2O_3$, $Fe_3O_4$, a mixture of gamma-$Fe_2O_3$ with $Fe_3O_4$, $CrO_2$, barium ferrite, or Berthollide compound and particles of ferromagnetic metals or ferromagnetic alloys such as Fe, Fe-Co, Co-Ni, Co-Cr, Fe-Co-Ni, Fe-Co-B, Fe-Co-Cr-B, Fe-Co-V, or iron nitride.

When the binder is to be used as a backside coating for a magnetic tape, a finely divided electrically-conductive form of carbon can be included to reduce the build-up of static electricity. Alternatively, or in addition to the electrically-conductive carbon, titanium dioxide or other inorganic fillers can be included in the backside.

## Preparation of Recording Medium

The magnetic recording medium of this invention is preferably prepared by first preparing a stable fluid, reactive dispersion of the finely divided particulate solid in a composition comprised of the dispersing polymer having hydroxyl functionality. The stable dispersions are preferably prepared by mixing the crude particulate solid into a mixture comprised of solvent, wetting agent, and suspending agent. At least a portion of the crosslinkable dispersing polymer is then added to form a wetted slurry. The wetted slurry is then milled until the average particle size of the crude magnetic particles is small enough such that the dispersion exhibits the desired smoothness. The soft-component contributing cobinder resin along with any remaining dispersing polymer and additional fluidizing solvents is added either before or after milling. The milling process will yield a stable dispersion of finely divided magnetic particles dispersed in a fluidizing solvent, the dispersing polymer contributing to the quality of the dispersion. The use of the dispersing polymer allows for more efficient production, i.e., fewer milling cycles, of a coatable particle/binder composition having a quality of dispersion equivalent to that of particle/binder compositions without the dispersing resin, but made with a greater number of milling cycles. This stable dispersion is then mixed with the crosslinker to form a curable composition.

The curable composition can then be coated on a non-magnetic support base and allowed to cure. The coating is preferably surface-treated prior to, or after, curing by well-known techniques of calendering, polishing and/or burnishing.

A preferred flexible support base is comprised of a film of synthetic polymer having desired degrees of flexibility and tensile strength. An example of a preferred flexible support base is a polyethylene terephthalate tape backing having a thickness from about 8 micrometers to about 80 micrometers.

Because the preferred flexible support bases, e.g., polyethylene terephthalate tape, should not be exposed for prolonged periods to temperatures above about 100 °C, the curable compositions prepared for use on flexible support bases should be curable to the desired degree at a temperature below about 100 °C. Accordingly, when preparing flexible magnetic media, the crosslinker chosen as a component of the

curable composition should be sufficiently reactive with the dispersing copolymer and other crosslinkable binder polymers or to crosslink the system to the desired degree at temperatures below about 100 °C, more preferably at ambient temperatures. In this respect, the crosslinker used in preparing flexible magnetic media should be a free polyisocyanate, rather than blocked isocyanates which require temperatures above about 100 °C to cure the binder resin system. Blocked polyisocyanates are known in the art as compounds having multiple isocyanate groups which have been reacted with a blocking compound, e.g., a ketoxime, such that the blocking reaction is reversible at elevated temperatures.

The magnetic medium of this invention is useful for recording magnetic signals when used with a variety of magnetic signal generating devices, e.g., in video tapes, computer tapes and diskettes, and the like.

## EXAMPLES

### Starting Materials

### General Preparation of Styrene Copolymers

The reaction is carried out in a 1 liter polymerization bottle to which calculated amounts of styrene and the comonomer (e.g. hydroxy ethyl acrylate or vinyl acetate or methyl acrylate, etc.) are charged. A measured volume of previously dried solvent (e.g. 2-butanone or ethyl acetate or tetrahydrofuran or toluene, etc.) was charged to the polymerization bottle prior to the charging of the monomers. Immediately following the monomer charge, a free radical initiator, preferably 1,1' azo-bis-cyclohexanecarbonitrile (available from duPont as VAZO™ 88), a chain transfer agent (e.g. t-dodecyl mercaptan) are added and the homogenous solution is purged with nitrogen to expel the oxygen present. The closed reaction bottle is then placed in a launderometer rotating agitator for 3 to 5 days at 75 °C. The resulting copolymer is essentially completely converted and can be used without further purification to become the polymeric dispersant for magnetic binders.

### Preparation of Styrene - Hydroxyethyl Acrylate Copolymer

The reaction is carried out in a 1 liter polymerization bottle charged with 70 ml of dry 2-butanone, 23 g. of purified styrene monomer, 7 g. of purified hydroxy ethyl acrylate monomer which were charged sequentially. This charging was followed by addition of 0.18 g. of VAZO™ 88 initiator, 4 drops of t-duodecyl mercaptan chain transfer agent. At this point, the homogenous solution is vigorously purged with a stream of nitrogen then quickly closed, taped and placed in a rotating launderometer agitator maintained at 75 °C for three days. The resulting copolymer is essentially completely converted and ready to be used as a polymeric dispersant.

### Preparation of Styrene - Allyl Alcohol Copolymer

The reaction is carried out in a 3-neck flask equipped with condenser, nitrogen inlet, mechanical stirrer, heating mantle and temperature control. The initial charge of 12 g. of styrene-methyl acrylate copolymer in 100 ml of distilled, N-methyl morpholine was nitrogen purged then 1.3 g. of lithium aluminum hydride (LAH) in 100 ml of purified N-methyl morpholine was added dropwise to the polymer solution blanketed with nitrogen. Stirring was maintained for two hours then the mixture was heated to reflux for 1/2 hour followed by cooling when 10 g. of sodium potassium tartrate in 50 ml of water was added. The reaction was heated to reflux for 1/2 hour. At this point the stirring was discontinued, the reaction was cooled and the supernatant organic layer containing the styrene-allyl alcohol copolymer decanted from the hard inorganic precipitate. The product structure was confirmed by spectroscopic analyses.

### Preparation of Styrene-Vinyl Alcohol Copolymer

12 g. of styrene-vinyl acetate (prepared by General Preparation procedure described above) were dissolved in 150 ml of dioxane in a reaction flask equipped as described above. To this was added 1.05 g. of sodium hydroxide in 15 ml of water. The reaction was heated to reflux overnight. The resulting styrene-vinyl alcohol copolymer was obtained by precipitation in methanol, washed successively with water and excess methanol then dried overnight in a vacuum oven. The product was identified by spectroscopic analyses.

The following reactive dispersants, shown in Table 1, below, were prepared by the procedures described above with the necessary variations. In Table I, the following abbreviations have the following meanings:

STY = styrene
HEA = 2-hydroxyethyl acrylate
HPA = 2-hydroxypropyl acrylate
AOH = allyl alcohol
VOH = vinyl alcohol
MA = methacrylic acid
PM = 2-methylamido-2-methylpropanephosphoric acid
SM = 2-acrylamido-2-methylpropanesulfonic acid
SSS = sodium styrenesulfonate
SPK = sulfopropylmethacrylate, potassium salt
VP = vinyl phenol

TABLE 1

| Characteristics of Dispersing Polymers | | | | | |
|---|---|---|---|---|---|
| Polymer | Styrene (wt%) | $M_n$ | $M_w$ | Polydispersity | Tg °C |
| STY-HEA | 64 | 99,256 | 330,224 | 3.3 | |
| STY-HEA | 77 | 65,156 | 162,027 | 2.5 | |
| STY-HEA | 77 | 69,410 | 164,960 | 2.4 | |
| STY-HEA | 77 | 71,538 | 180,982 | 2.5 | |
| STY-HEA | 77 | 64,674 | 171,632 | 2.7 | |
| STY-HEA | 77 | 58,232 | 190,081 | 3.3 | |
| STY-HEA | 77 | 51,568 | 192,279 | 3.7 | |
| STY-HEA | 74 | 43,076 | 107,759 | 2.5 | |
| STY-HEA | 74 | 45,252 | 117,832 | 2.6 | 86 |
| STY-HEA | 74 | 43,717 | 116,425 | 2.7 | |
| STY-HEA | 64 | 31,354 | 87,781 | 2.8 | |
| STY-HEA | 74 | 6,831 | 17,247 | 2.5 | |
| STY-HEA | 74 | 5,803 | 13,906 | 2.4 | 51 |
| STY-HEA | 74 | 7,089 | 17,397 | 2.5 | 54 |
| STY-HEA | 74 | 5,957 | 14,045 | 2.4 | |
| STY-AOH | 80 | 11,804 | 55,957 | 4.7 | 101 |
| STY-AOH | 68 | | | | 89 |
| STY-AOH | 80 | | | | 94 |
| STY-VOH | 87 | 21,218 | 45,684 | 2.2 | 104 |
| STY-VOH | 87 | 23,402 | 48,644 | 2.1 | 104 |
| STY-VOH | 87 | 17,729 | 38,479 | 2.2 | 103 |
| STY-HPA-SM | -- | -- | -- | -- | -- |
| STY-HPA-PM | -- | -- | -- | -- | -- |
| STY-HPA-MA | -- | -- | -- | -- | -- |
| STY-HPA | -- | -- | -- | -- | -- |
| VP | -- | 30,000 | -- | -- | 159 |

Multi-Hydroxyl-Functional Urethanes (MHFU)

The multi-hydroxyl-functional urethanes used as soft-component contributing cobinder resins in the examples below are described below.

Multi-Hydroxyl-Functional Urethane-I (MHFU-I)

This multi-hydroxy polyurethane was prepared by carrying out the reaction in a 22-liter, three-neck reaction flask, heated by a variac-controlled heating mantle, fitted with thermometer, mechanical stirrer, and

a condenser with means for introducing nitrogen to maintain an inert atmosphere within the reaction flask. An initial charge of 1,033g of 4,4' methylene-bis-(cyclohexyl) diisocyanate (H-MDI), 191.7g of 1,4-cyclohexanedimethanol, 1,902.7g of polytetramethyleneoxide diol having a molecular weight of about 650g/mol (available from duPont as TERACOL™ 650), 110.2g of glycerol, 5,244g of methyl ethyl ketone and 1.7g of dibutyltin dilaurate was introduced into the 22-liter reaction flask, which had first been flushed with nitrogen. The nitrogen atmosphere was maintained throughout the reaction. The mixture was heated at reflux temperature until no isocyanate was detectable by infrared spectroscopic examination. This occurred after about an hour of refluxing. At this point an inherent viscosity in methyl ethyl ketone of about 0.15 had been reached. Additional chargings of the remaining 259g of H-MDI in increments were made followed by refluxing until the desired inherent viscosity of 0.23 was reached. A sample of multi-hydroxy functional polyurethane (MHFU-I) exhibited a glass transition temperature (Tg) of -32°C, a weight average molecular weight of 43,652, a number average molecular weight of 12,366 and a hydroxyl equivalent weight of 1,601.

Multi-Hydroxyl-Functional Urethane-II (MHFU-II)

The preparation of this multi-hydroxy-functional urethane was carried out in a 22-liter, three-neck reaction flask heated by a variac-controlled heating mantle and fitted with a thermometer, mechanical stirrer, and a condenser with a means for introducing and maintaining an inert nitrogen atmosphere above the reactant mixture. A charge of 673.6g of isophorone diisocyanate, 1300g of a polytetramethyleneoxide diol having a molecular weight of about 1000g/mol (available from duPont as Teracol™ 1000), 305.6g of 1,4 cyclohexanedimethanol, 28.08g of glycerol, 3,460g of methyl ethyl ketone and 0.46g of dibutyltin dilaurate was introduced into the 22-liter reaction flask which had first been flushed with nitrogen and the nitrogen atmosphere was maintained. The mixture was heated at reflux temperature under nitrogen atmosphere until no isocyanate was detectable by infrared spectroscopic examination. This required about one hour of heating at reflux. At that point the inherent viscosity determined in methyl ethyl ketone solution was 0.15. An additional charge of 75.01g of isophorone diisocyanate was made and heating at reflux temperature was continued for one hour at which time no isocyanate was detectable by infrared spectroscopic examination. The inherent viscosity was then 0.21. Charging of isophorone diisocyanate increments was continued until an inherent viscosity of from 0.23 to 0.33 was achieved. A sample of the resulting polyurethane exhibited a glass transition temperature of -32°C, a weight average molecular weight of 45,092 and a hydroxyl equivalent weight of 3680.

Standard Formulating and Coating Procedure

A representative formulation for preparing flexible magnetic recording medium of this invention was prepared from a reactive dispersion of this invention as follows.

Reactive Dispersion

First, a slurry was prepared from the following components.

| Material | Amount by Wt in Grams | % Solids | Function |
|---|---|---|---|
| Cobalt doped magnetic gamma iron oxide | 25 | 84.7 | Magnetic pigment |
| Solvent blend (70% methyl ethyl ketone, 20% cyclohexanone, 10% Toluene) | 17 | --- | Solvent |
| Phosphoric acid ester | 2.0 | 6.8 | Wetting agent |
| Quaternary Ammonium Phosphate (available as Emcol™ Phosphate from Witco Chemical Co.) | 0.5 | 1.7 | Suspending aid |

The above mixture was mixed in a water jacketed Shar mixer at 4200 rpm for about 3 hours. The resulting slurry was checked for smoothness by visual inspection for transmitted light under a 256 power microscope. A copolymer described in Table 2, below, was then added to the mixture in an amount of 1.10 g (3.59% by weight) and 2.2g of MHFU-II (41.39%) was added. The resulting mixture was mixed at 4800 rpm for an additional 1/2 hour. The mixture was then transferred to an Eiger mill where it was milled until it was smooth, e.g. 7 to 10 passes at approximately one and a half hours per pass.

Coatable Binder Composition

The following ingredients were added to the reactive dispersion prepared above.

| Material | Amount by Wt in Grams | % Solids | Function |
|---|---|---|---|
| Butyl myristate | 0.13 | 0.44 | Lubricant |
| Myristic acid | 0.875 | 3.0 | Lubricant |
| $Al_2O_3$ dispersion | 0.2 | | Head cleaning agent |
| Trifunctional isocyanate (60% solids) (available from Mobay as CB-60) | * | --- | Crosslinker |
| * Sufficient for 130 Index. The tri-functional isocyanate charge is calculated by adding the number of Eqts (including those for the additional resin to be tested) times the "index" in percent (1.3 in this case), times the Eq. Wt. of CB-60 (405). This gives the grams of activator for that particular index. | | | |

The resulting mixture was homogenized with a Shar mixer to yield a coatable binder composition.

Tape Preparation

The coatable binder composition prepared above was coated at a thickness of 5 micrometers on a 35 micrometer thick poly(ethylene terephthalate) backing using a gravure roll coater. The resulting coating was then surface treated.

Examples 1-6

With the above standard formulation, the following dispersing polymers were evaluated. 1.10g (3.59% by weight) were used with the formulation described above.

TABLE 2

| Example | Polymer | $M_n$ |
|---|---|---|
| 1. | Styrene-Hydroxyethyl Acrylate | 65,156 |
| 2. | Styrene-Hydroxyethyl Acrylate | 69,410 |
| 3. | Styrene-Hydroxyethyl Acrylate | 71,538 |
| 4. | Styrene-Hydroxyethyl Acrylate | 58,232 |
| 5. | Styrene-Hydroxyethyl Acrylate | 5,803 |
| 6. | Styrene-Vinyl Alcohol | 21,218 |

The tapes were made and their properties were measured. The thickness was obtained using a caliper. Table 3 gives the thicknesses of the magnetic coating and backing in micrometers. The modulus is given in kilopascal (kPa). The Ranta is a measure of isocyanate cure; the lower the Ranta, the higher the degree of cure. Both the modulus and Ranta were measured after 24 hours, after four days and again after seven days. The gloss is a measure of smoothness and reflectivity; 100+ is desirable. Solvent resistance is measured by the solvent swell with dimethyl formamide (DMF); 6+ is acceptable.

TABLE 3
PHYSICAL PROPERTIES OF MAGNETIC TAPES

| | | Thickness | | 24 Hour | | | 4 Days | | 7 Days | |
|---|---|---|---|---|---|---|---|---|---|---|
| Ex. | Polymer | Magnetic Coating (micrometer) | Film Substrate (micrometer) | Flexural Modulus (kPa x $10^6$) | Solvent Swell | Ranta | Flexural Modulus (kPa x $10^6$) | Ranta | Flexural Modulus (kPa x $10^6$) | 45° Gloss |
| 1 | 1. | 7.3 | 23.3 | 5.5 | 6 + 1L | 0.015 | 6.7 | 0.016 | 6.7 | 100+ |
| 2 | 2. | 7.3 | 23.3 | 6.0 | 6 + 1L | 0.013 | 7.3 | 0.013 | 7.3 | 100+ |
| 3 | 3. | 7.0 | 22.2 | 5.6 | 6 + 1L | 0.011 | 6.3 | 0.013 | 6.3 | 100+ |
| 4 | 4. | 6.5 | 23.0 | 5.9 | 6 + 1L | 0.011 | 6.3 | 0.013 | 6.3 | 100+ |
| 5 | 5. | 8.0 | 23.0 | 5.4 | 6 + 1L | 0.013 | 5.9 | 0.020 | 6.2 | 100+ |
| 6 | 6. | 6.5 | 23.0 | 6.4 | 6 + 1L | 0.019 | 7.6 | 0.017 | 7.6 | 100+ |

The data in Tables 3, particularly the gloss data, show that the high molecular weight dispersing polymers of this invention yield excellent dispersions.

Example 7

Polymer 7, a styrene-allyl alcohol copolymer having a number average molecular weight of about 11,804, was evaluated in a represenative formulation set forth in Table 4, below. The copolymer was added in an amount of 1.10g solids to the formulation and the formulation and coating procedure was the same as that of Examples 1-6.

TABLE 4

| Formulation Used To Evaluate Styrene-Allyl Alcohol Examples | | | | | |
|---|---|---|---|---|---|
| | Grams | Percent Solids | Percent Based On Pigment | Eq.[1] Wt. | No. of Eqs. |
| Cobalt doped gamma iron oxide | 25 | 100 | | | |
| Solvent Mix[2] | 16 | --- | | | |
| Phosphoric acid ester | 1.33 | 75 | 4.0 | 560 | 0.00238 |
| Quaternary ammonium acetate | 0.50 | 100 | 2.0 | 1100 | 0.00045 |
| VAGH (32%) | 0.94 | 32 | 1.2 | 1915 | 0.00049 |
| MHFU-II(Binder) | 2.0 | 40 | 3.2 | 3400 | 0.00024 |
| Lubricant Solution[3] | 0.50 | 75 | 1.5 | | |
| Head Cleaning Agent | 1.25 | 63 | 3.2 | | |
| Tri-functional isocyanate Crosslinker (CB-60) (130 Index) | aprx.3 | 60 | | 405 | |

1 These Eq. Wts. are corrected for percent solids.
2 70% MEK, 20% cyclohexanone, 10% toluene.
3 50% butyl myristate, 25% myristic acid, 25% toluene.

TABLE 5

PHYSICAL PROPERTIES OF MAGNETIC TAPES FROM STYRENE-ALLYL ALCOHOL COPOLYMERS

| Example | $M_n$ of STY-AOH Polymer | Coating Thickness (Micrometers) | Coating Modulus (kPa x $10^6$) | | Solvent Swell | | Ranta | | |
|---|---|---|---|---|---|---|---|---|---|
| | | | 24-Hour | 6-Day | 24-Hour | 6-Day | 24-Hour | 6-Day | Gloss |
| 7 | 11,804 | 6.6 | 6.4 | 12.4 | 6 | 6 | 0.144 | 0.83 | 94 |

The coating modulus of the samples cured for 24 hours and 6 days indicates the tapes will have excellent mechanical properties. The gloss ratings indicate the particles are well dispersed. In view of the desire in the art to use thinner backings, the excellent flexural modulus is important because it contributes a degree of stiffness to the tape that is no longer contributed by the thinner backings.

EXAMPLES 8-12

Homopolymers of Vinyl Phenol and HPA Copolymers and Terpolymers

The following polymers shown in Table 6 below, were evaluated in the formulation of Table 4 in the amounts shown in Table 6.

Table 6

| Polymer | Monomers | Mol. Wt. | Tg (°C) | Wt. (g) | % solids |
|---|---|---|---|---|---|
| B | VP | 1,500-7,000 | 153 | 1.46 | 20.6 |
| 8 | VP | 30,000 | 159 | 1.4 | 20.6 |
| 9 | STY-HPA-SM | -- | -- | 1.66 | 36 |
| 10 | STY-HPA-PM | -- | -- | 1.80 | 33 |
| 11 | STY-HPA-MA | -- | -- | 2.12 | 28 |
| 12 | STY-HPA | -- | -- | 2.54 | 23.6 |

Tapes prepared using the above formulations had the properties shown in Table 7 below.

The tapes were made and their properties were measured as above. The modulus is given in kilopascals (KPa). The Ranta is a measure of isocyanate cure; the lower the Ranta, the higher the degree of cure. The modulus and Ranta were measured after 24 hours, three days and again after seven days. Solvent resistance is measured by the solvent swell with dimethyl formamide (DMF); 6 is acceptable.

TABLE 7

PHYSICAL PROPERTIES OF MAGNETIC TAPES

| Example | Polymer of Table 6 | 24 Hour Modulus kPa x $10^6$ | 24 Hour Solvent Swell | 24 Hour Ranta | 3 Days Modulus kPa x $10^6$ | 3 Days Solvent Swell | 3 Days Ranta | 7 Days Modulus kPa x $10^6$ | 7 Days Solvent Swell | 7 Days Ranta |
|---|---|---|---|---|---|---|---|---|---|---|
| B | B | - | - | - | 7.8 | 6 | 0.093 | 8.1 | - | 0.087 |
| 8 | 8 | - | - | - | 8.1 | 6 | 0.112 | 8.6 | - | 0.070 |
| 9 | 9 | 4.4 | 4 | - | - | - | - | 7.7 | 6 | 0.068 |
| 10 | 10 | 4.4 | 4 | - | - | - | - | 7.3 | 6 | 0.067 |
| 11 | 11 | 3.7 | 4 | - | - | - | - | 7.9 | 6 | 0.039 |
| 12 | 12 | 4.4 | - | - | - | - | - | 8.3 | 6 | 0.182 |

Some examples of the low molecular weight variation of the inventive recording media were also made and tested.

EXAMPLE 13

First, a slurry was prepared from the following components.

| Material | Amount by Wt in Grams | Solids | Function |
|---|---|---|---|
| Cobalt doped magnetic gamma iron oxide (30-35 $m^2$/gm) | 2152 | 2152 | Magnetic pigment |
| Solvent blend (70% methyl ethyl ketone, 20% cyclohexanone, 10% Toluene) | 1445 | --- | Solvent |
| Phosphoric acid ester (75% solids in Toluene) | 107 | 80 | Wetting agent |
| Quaternary ammonium acetate (available as Emcol™ Acetate from Witco Chemical Co.) | 40 | 40 | Suspending agent |

The above mixture was mixed and checked for smoothness as described previously. A styrene/allyl alcohol copolymer available from Monsanto as RJ-100 was then added to the mixture in the form of 47 grams of the copolymer dissolved in 110 grams of methyl ethyl ketone (MEK). The styrene/allyl alcohol copolymer had a hydroxyl percent of 5.7%, an equivalent weight of 300, a number average molecular weight of 1600, and a weight average molecular weight of 2300. The resulting mixture was mixed at 4800 rpm for an additional 1/2 hour. The mixture was then transferred to an Eiger mill where it was milled until it was smooth, e.g. 7 to 10 passes at approximately one and a half hours per pass. An additional 22 grams of the styrene/allyl alcohol copolymer dissolved in 50 grams of MEK was then added to the mixture along with 160 grams of MHFU-I in 242 grams of MEK. The resulting mixture was milled for an additional 5 hours to yield a stable fluid reactive dispersion of this invention. This coatable binder has a 70/30 ratio by weight of "soft" resin binder (MHFU-I) to "hard" resin binder (styrene/allyl alcohol copolymer).

Coatable Binder Composition

The following ingredients were added to the reactive dispersion prepared above.

| Material | Amount by Wt in Grams | Solids | Function |
|---|---|---|---|
| Butyl myristate | 32.3 | 32.3 | Lubricant |
| Myristic acid | 21.5 | 21.5 | Lubricant |
| $Al_2O_3$ dispersion | 143.5 | 86.1 | Head cleaning agent |
| Trifunctional isocyanate (available from Mobay as CB-60) | 367 | 220.2 | Crosslinker |

The resulting mixture was homogenized with a shear mixer to yield a coatable binder composition.
The coatable binder composition prepared above was coated at a thickness of 5 micrometers on a 14 micrometer thick poly(ethylene terephthalate) backing using a gravure roll coater. The resulting coated film was calendered.

Magnetic Recording Media Properties

The magnetic recording media manufactured above exhibited the following properties.
Flexural Modulus (measured by the procedure of ASTM-D-890 after 7 day cure at room temperature): 6.7 x $10^6$ KPa
% Polymer Cure 97.5% (2.5% extracted by THF after curing 7 days at 23°C and 50% RH)

EXAMPLE 14

Another representative magnetic recording medium was prepared as in Example 13 with the following exceptions, changes and/or omissions. The reactive dispersion of Example 14 was the same as that of Example 13 except that the initial charge of 47 grams of styrene/allyl alcohol copolymer in 110 grams of MEK was reduced to 41 grams of styrene/allyl alcohol copolymer in 96 grams of MEK. Also, the secondary

charge of styrene/allyl alcohol copolymer was increased from 22 grams in 50 grams MEK to 38 grams, styrene/allyl alcohol copolymer in 89 grams MEK. The charge of MHFU - I was reduced from 161 grams in 242 grams of MEK to 52 grams MHFU - I in 78 grams of MEK. This coatable binder has a 40/60 ratio by weight of soft binder resin (MHFU-I) to "hard" resin binder (styrene/allyl alcohol copolymer).

The only change in the coatable binder composition was a reduction in the amount of trifunctional isocyanate crosslinker from 220.2 grams solids in 146.8 grams solvent to 190.8 grams solids in 127.2 grams solvent. The resulting magnetic properties of the resulting magnetic recording medium are shown below.

Flexural Modulus (7 day cure): 7.6 x $10^6$ KPa

% Polymer Cure approximately 100% (negligible THF extractibles after curing 7 days at 23°/50% RH)

EXAMPLE 15

A backside coating used as an antistatic layer was prepared and coated by the procedures described above with the exceptions noted below. The binder is a blend of "hard" resin (70/30 RJ-100/VAGH) with "soft" resin (MHFU-I).

| Material | Amount by wt. in Grams | Solids | Function |
|---|---|---|---|
| Acetylene Carbon | 100 | 100 | Antistat |
| Methyl Ethyl Ketone | 163 | | Solvent |
| Toluene | 68 | | Solvent |
| Cyclohexanone | 30 | | Solvent |
| Phosphoric Acid Ester (described above) | 2.7 | 2 | Wetting Agent |
| Styrene-Allyl Alcohol[1] Resin in MEK | 59 | 17.7 | Binder Resin |
| Vinyl Chloride[2] Resin in MEK | 23 | 7.4 | Binder Resin |
| MHFU-I | 61 | 25 | Binder Resin |
| Trifunctional Isocyanate[3] | 47.5 | 28.5 | Crosslinker |

[1] Available from Monsanto as RJ-100

[2] Available from Union Carbide as VAGH™ Resin

[3] Available from Mobay as CB-60

## Claims

**1.** A magnetic recording medium comprising:

a. a non-magnetic support base having two opposing major surfaces, and

b. a magnetizable or non-magnetizable layer on at least a portion of at least one of said major surfaces, wherein at least one of said magnetizable or non-magnetizable layers is comprised of a finely divided particulate solid and a crosslinked binder mixture therefor, which crosslinked binder mixture is characterized by being comprised of:

(1) at least 5 weight percent of a hard component dispersing polymer having a degree of polymerization greater than 100 comprised of units derived from:

(i) one or more vinyl aromatic monomers and one or more ethylenically unsaturated monomers having aliphatic hydroxyl functionality, or

(ii) one or more vinyl aromatic monomers having hydroxyl functionality,

which polymer is crosslinked into said binder; and

(2) a soft-component contributing polymer which is a multi-hydroxyl-functional polyurethane; the weight ratio of hard-component contributing polymers to soft-component contributing polymers ranging from 1:4 to 4:1.

**2.** A magnetic recording medium having a magnetizable layer and comprising:

a. a flexible, non-magnetizable support base having two opposing major surfaces, and

b. a layer on at least one of said major surfaces, which layer is comprised of a finely divided particulate solid dispersed and fixed in a crosslinked binder mixture therefor, said finely divided particulate solid being selected from magnetic particles, electrically-conductive carbon black, and inorganic fillers suitable for backside coatings on magnetic recording tape, said crosslinked binder mixture being characterized by containing

(1) at least 5 weight percent of a dispersing polymer having a degree of polymerization of not more than 100 and comprised of units derived from:

(i) one or more vinyl aromatic monomers, and

(ii) one or more ethylenically unsaturated monomers having aliphatic hydroxyl functionality, which polymer is crosslinked into said crosslinked binder mixture; and

(2) a soft-component contributing cobinder resin which is a multi-hydroxyl-functional polyurethane, the weight ratio of hard-component binder resins to soft-component binder resins ranging from 1:4 to 4:1.

**3.** A magnetic recording medium in accordance with claim 1 or 2 wherein said dispersing polymer is a copolymer of styrene and a monomer selected from allyl alcohol, 2-hydroxyethyl acrylate, and 2-hydroxypropyl acrylate.

**4.** A magnetic recording medium in accordance with claim 1 wherein said dispersing polymer is of the type described in subparagraph (i) and is further comprised of a monomer having one or more functional groups having polarity higher than an aliphatic hydroxyl group, said functional groups being selected from carboxylic acid groups, phosphonic acid groups, sulfonic acid groups, and salts of each.

**5.** A magnetic recording medium in accordance with claim 1 wherein said dispersing polymer is a homopolymer comprised of units derived from vinyl phenol.

**6.** A magnetic recording medium in accordance with any one of claims 1 to 5 wherein said multi-hydroxyl-functional polyurethane is the polymerization reaction product of a mixture comprising a long chain diol having a molecular weight of from about 500 to 3000, an organic diisocyanate, and a short chain triol having a molecular weight of less than about 500.

**7.** A magnetic recording medium in accordance with any one of claims 1 to 6 which is further characterized by containing another hard-component resin selected from vinyl and nitrocellulose resins.

**8.** A method of preparing a flexible magnetic recording medium, having a magnetizable layer, by the steps of:

a. preparing a dispersion of finely divided particulate solid and a binder

b. coating at least one surface of a flexible, polymeric, non-magnetizable support base with said dispersion; and

c. curing said dispersion; which is characterized by:

(1) the binder comprises

(i) a hard component dispersing polymer comprised of units derived from one or more vinyl aromatic monomers and one or more ethylenically unsaturated monomers, having aliphatic hydroxyl functionality, or one or more vinyl aromatic monomers having hydroxyl functionality, and

(ii) a multi-hydroxy-functional soft-component polyurethane, there being a weight ratio of hard to soft polymers in the dispersion of from 1:4 to 4:1

(2) said dispersion of particulate solid and binder is mixed with a crosslinker comprising a polyfunctional organic compound having functional groups capable of reacting with the hydroxyl groups in the dispersing polymer; and (3) curing is at a temperature below 100 °C.

## Patentansprüche

**1.** Magnetischer Aufzeichnungsträger, dadurch gekennzeichnet, daß er folgendes aufweist:

a) eine nicht magnetische Auflagebasis mit zwei gegenüberliegenden Hauptoberflächen, und

b) eine magnetisierbare oder nicht-magnetisierbare Schicht auf wenigstens einem Teil mindestens einer der genannten Hauptoberflächen, dadurch gekennzeichnet, daß wenigstens eine der genannten magnetisierbaren oder nicht-magnetisierbaren Schichten aus einem feinverteilten, aus Partikeln bestehenden Feststoff besteht und einer vernetzten Bindemittelmischung dafür, dadurch gekennzeichnet, daß diese vernetzte Bindemittelmischung folgendes aufweist:

(1) mindestens 5 Gewichtsprozent eines festen Bestandteils eines dispergierenden Polymers mit einem Polymerisationsgrad von mehr als 100, wobei sich das Polymer aus Einheiten zusammensetzt, die sich aus folgendem ableiten:

(i) einem oder mehreren vinylaromatischen Monomeren und einem oder mehreren ethylenisch ungesättigten Monomeren mit aliphatischer Hydroxylwirksamkeit, oder

(ii) einem oder mehreren vinylaromatischen Monomeren mit Hydroxylwirksamkeit,

dadurch gekennzeichnet, daß das Polymer in das genannte Bindemittel vernetzt ist; und

(2) ein weiches eingebrachtes Polymer, bei dem es sich um ein Mehrfach-Hydroxylwirksamkeits-Polyurethan handelt; wobei das Gewichtsverhältnis der eingebrachten festen Polymere zu den eingebrachten weichen Polymeren zwischen 1:4 und 4:1 liegt.

**2.** Magnetischer Aufzeichnungsträger mit einer magnetisierbaren Schicht, der folgendes aufweist:

a) eine elastische, nicht-magnetisierbare Auflagebasis mit zwei entgegengesetzten Hauptoberflächen, und

b) eine Schicht auf wenigstens einer der genannten Oberflächen, wobei sich die Schicht aus einem feinverteilten, aus Partikeln bestehenden Feststoff zusammensetzt, der dafür dispergiert ist und sich fest in einer vernetzten Bindemittelmischung befindet, dadurch gekennzeichnet, daß der genannte fein verteilte, aus Partikeln bestehende Feststoff aus Magnetteilchen, elektrisch leitendem Carbon Black und anorganischen Füllstoffen ausgewählt wird, die für die Rückseitenbeschichtung von Magnettonbändern geeignet sind, wobei die genannte vernetzte Bindemittelmischung dadurch gekennzeichnet ist, daß sie folgendes aufweist:

(1) mindestens 5 Gewichtsprozent eines dispergierenden Polymers mit einem Polymerisationsgrad von nicht mehr als 100, wobei sich das Polymer aus Einheiten zusammensetzt, die sich aus folgendem ableiten:

(i) einem oder mehreren vinylaromatischen Monomeren, und

(ii) einem oder mehreren ethylenisch ungesättigten Monomeren mit aliphatischer Hydroxylwirksamkeit, dadurch gekennzeichnet, daß das Polymer in die genannte Bindemittelmischung vernetzt ist; und

(2) ein weiches eingebrachtes mitverbindendes Kunstharz, bei dem es sich um ein Mehrfach-Hydroxylwirksamkeits-Polyurethan handelt; wobei das Gewichtsverhältnis der eingebrachten festen Kunstharzbindemittel zu den eingebrachten weichen Kunstharzbindemitteln zwischen 1:4 und 4:1 liegt.

**3.** Magnetischer Aufzeichnungsträger gemäß den Ansprüchen 1 oder 2, dadurch gekennzeichnet, daß es sich bei dem genannten dispergierenden Polymer um ein Styrol-Kopolymer und ein Monomer handelt, das unter Allylalkohol, 2-Hydroxyethylacrylat und 2-Hydroxypropylacrylat ausgewählt wird.

**4.** Magnetischer Aufzeichnungsträger nach Anspruch 1, dadurch gekennzeichnet, daß das dispergierende Polymer von der im Absatz (i) beschriebenden Art ist und dadurch, daß es ferner ein Monomer umfaßt, mit einer oder mehreren Funktionsgruppen mit einer Polarität, die größer ist als eine aliphatische Hydroxylgruppe, wobei die Funktionsgruppen aus Karbonsäuregruppen, Phosphorsäuregruppen, Sulfosäuregruppen und Salzen jeder dieser Gruppen ausgewählt werden.

**5.** Magnetischer Aufzeichnungsträger nach Anspruch 1, dadurch gekennzeichnet, daß es sich bei dem dispergierenden Polymer um ein Homopolymerisat handelt, welches sich aus Einheiten zusammensetzt, die von Vinylphenol abgeleitet werden.

**6.** Magnetischer Aufzeichnungsträger gemäß den Ansprüchen 1 bis 5, dadurch gekennzeichnet, daß es sich bei dem Mehrfach-Hydroxylwirksamkeits-Polyurethan um das Polymerisations-Reaktionsprodukt einer Mischung handelt, die ein langkettiges Diol mit einem Molekulargewicht von etwa 500 bis 3000, ein organisches Diisocyanat und ein kurzkettiges Triol mit einem Molekulargewicht von weniger als etwa 500 umfaßt.

**7.** Magnetischer Aufzeichnungsträger gemäß den Ansprüchen 1-6, ferner dadurch gekennzeichnet, daß er ein weiteres hartes Kunstharz aufweist, das unter Vinylharzen und Nitrozelluloseharzen ausgewählt wird.

**8.** Verfahren zur Herstellung eines elastischen magnetischen Aufzeichnungsträgers mit einer magnetisierbaren Schicht, wobei das Verfahren folgende Schritte umfaßt:

a) Herstellung einer Dispersion eines feinverteilten Feststoffs und eines Bindemittels,

b) Beschichtung mindestens einer Oberfläche einer elastischen, polymeren, nicht-magnetisierbaren Auflagebasis mit der genannten Dispersion; und

c) Fermentieren lassen der genannten Dispersion; die dadurch gekennzeichnet ist, daß:

(1) das Bindemittel folgendes umfaßt:

(i) ein festes dispergierendes Polymer, das sich aus Einheiten zusammensetzt, die entweder von einem oder mehreren vinylaromatischen Monomeren und einem oder mehreren ethylenisch ungesättigten Monomeren mit aliphatischer Hydroxylwirksamkeit abstammen oder von einem oder mehreren vinylaromatischen Monomeren mit Hydroxylwirksamkeit, und

(ii) ein weiches Mehrfach-Hydroxylwirksamkeits-Polyurethan, mit einem Gewichtsverhältnis des harten Polymers zu dem weichen Polymer in der Dispersion, das zwischen 1:4 und 4:1 liegt,

(2) die genannte Dispersion des aus Partikeln bestehenden Feststoffs und des Bindemittels mit einem Vernetzungsmittel gemischt wird, wobei das Vernetzungsmittel eine organische Mehrzweckverbindung mit Funktionsgruppen umfaßt, die mit den Hydroxylgruppen in dem dispergierenden Polymer reaktionsfähig sind; und

(3) die Curietemperatur unter 100 ° C liegt.

## Revendications

**1.** Support d'enregistrement magnétique comprenant :

a. un support de base non magnétique comportant deux surfaces principales opposées, et

b. une couche magnétisable ou non magnétisable, sur au moins une portion d'au moins l'une desdites surfaces principales, où au moins l'une desdites couches magnétisables ou non magnétisables est constituée d'un solide particulaire finement divisé et d'un mélange de liants réticulés destinés à ce dernier, lequel mélange de liants réticulés est caractérisé en ce qu'il est constitué :

(1) d'au moins 5 % en poids d'un polymère dispersant, constituant dur, ayant un degré de polymérisation supérieur à 100 et comprenant des motifs dérivant

(i) d'un ou plusieurs monomères vinylaromatiques et d'un ou plusieurs monomères à insaturation éthylénique ayant une fonctionnalité hydroxyle aliphatique, ou

(ii) d'un ou plusieurs monomères vinylaromatiques ayant une fonctionnalité hydroxyle,

ledit polymère étant réticulé dans ledit liant, et

(2) d'un polymère contribuant à un constituant souple, lequel est un polyuréthanne à plusieurs fonctionnalités hydroxyle ; le rapport pondéral des polymères contribuant au constituant dur aux polymères contribuant au constituant souple étant de 1:4 à 4:1.

**2.** Support d'enregistrement magnétique ayant une couche magnétisable et comprenant :

a. un support de base souple et non magnétisable comportant deux surfaces principales opposées, et

b. une couche sur au moins l'une desdites surfaces principales, cette couche étant constituée d'un solide particulaire finement divisé et fixé dans un mélange de liants réticulés destinés à ce dernier, ledit solide particulaire finement divisé étant choisi parmi l'ensemble comprenant les particules magnétiques, le noir de carbone électroconducteur et les charges minérales convenant aux revêtements d'envers du ruban d'enregistrement magnétique, ledit mélange de liants réticulés étant caractérisé en ce qu'il contient

(1) au moins 5 % en poids d'un polymère dispersant ayant un degré de polymérisation non supérieur à 100 et constitué de motifs dérivant

(i) d'un ou plusieurs monomères vinylaromatiques et

(ii) d'un ou plusieurs monomères à insaturation éthylénique ayant une fonctionnalité hydroxyle aliphatique, ledit polymère étant réticulé dans ledit mélange de liants réticulés; et

(2) une résine co-liante contribuant au constituant souple, qui est un polyuréthanne à plusieurs fonctionnalités hydroxyle, le rapport pondéral des résines liantes du constituant dur aux résines liantes du constituant souple étant de 1:4 à 4:1.

**3.** Support d'enregistrement magnétique selon la revendication 1 ou 2, dans lequel ledit polymère dispersant est un copolymère du styrène et d'un monomère choisi parmi l'ensemble comprenant l'alcool allylique, l'acrylate de 2-hydroxyéthyle et l'acrylate de 2-hydroxypropyle.

**4.** Support d'enregistrement magnétique selon la revendication 1, dans lequel ledit polymère dispersant est du type décrit à l'alinéa (i) et est en outre constitué d'un monomère comportant un ou plusieurs groupes fonctionnels ayant une polarité supérieure à celle d'un groupe hydroxyle aliphatique, lesdits groupes fonctionnels étant choisis parmi l'ensemble comprenant les groupes acide carboxylique, les

groupes acide phosphonique, les groupes acide sulfonique et les sels de chacun d'entre eux.

5. Support d'enregistrement magnétique selon la revendication 1, dans lequel ledit polymère dispersant est un homopolymère constitué de motifs dérivant du vinylphénol.

6. Support d'enregistrement magnétique selon l'une quelconque des revendications 1 à 5, dans lequel ledit polyuréthanne comportant plusieurs fonctionnalités hydroxyle est le produit de la réaction de polymérisation d'un mélange comprenant un diol à longue chaîne ayant une masse moléculaire d'environ 500 à 3000, un diisocyanate organique et un triol à chaîne courte ayant une masse moléculaire inférieure à environ 500.

7. Support d'enregistrement magnétique selon l'une quelconque des revendications 1 à 6, caractérisé en outre en ce qu'il contient une autre résine pour constituant dur, choisie parmi l'ensemble comprenant les résines vinyliques et les résines de nitrocellulose.

8. Procédé pour préparer un support d'enregistrement magnétique souple ayant une couche magnétisable, par les étapes consistant :
   a. à préparer une dispersion d'un solide particulaire finement divisé et d'un liant,
   b. à revêtir de ladite dispersion au moins une surface d'un support de base souple, polymère et non magnétisable, et
   c. à durcir ladite dispersion ;
   caractérisé en ce que :
   (1) le liant comprend
   (i) un polymère dispersant pour constituant dur, constitué de motifs dérivant d'un ou plusieurs monomères vinylaromatiques et d'un ou plusieurs monomères à insaturation éthylénique, ayant une fonctionnalité hydroxyle aliphatique, ou d'un ou plusieurs monomères vinylaromatiques ayant une fonctionnalité hydroxyle, et
   (ii) un polyuréthanne à plusieurs fonctionnalités hydroxyle, servant de constituant souple, avec entre les polymères durs et les polymères souples dans la dispersion un rapport pondéral de 1:4 à 4:1,
   (2) ladite dispersion du solide particulaire et du liant est mélangée à un agent de réticulation comprenant un composé organique polyfonctionnel ayant des groupes fonctionnels à même de réagir avec les groupes hydroxyle du polymère dispersant ; et
   (3) on procède à un durcissement à une température inférieure à 100 °C.